# EUROPEAN PATENT SPECIFICATION

(11) **EP 4 138 177 B1**
(45) Date of publication and mention of the grant of the patent: **28.08.2024**
(21) Application number: 22188101.4
(22) Date of filing: 01.08.2022
(51) Int. Cl.: H01M 10/613, H01M 10/625, H01M 10/6563, H01M 10/6566, H01M 10/6557, H01M 10/663, H01M 50/207, H01M 50/249, H01M 50/224

(54) **BATTERY PACK**
BATTERIEPACK
BLOC D'ACCUMULATEUR

(30) Priority: 19.08.2021 JP 2021133905
(43) Date of publication of application: 22.02.2023
(73) Proprietor: TOYOTA JIDOSHA KABUSHIKI KAISHA, Toyota-shi, Aichi-ken, 471-8571 (JP)
(72) Inventor: WATANABE, Hirotaka, Toyota-shi, 471-8571 (JP); BABA, Kenji, Toyota-shi, 471-8571 (JP); YAMADA, Masahiro, Toyota-shi, 471-8571 (JP)
(74) Representative: D Young & Co LLP

(56) References cited:
- US-A1- 2011 240 251
- US-A1- 2017 373 361
- US-A1- 2019 305 390

## Description

### BACKGROUND OF THE INVENTION

### 1. Field of the Invention

The present disclosure relates to a battery pack configured to be installed a vehicle.

### 2. Description of Related Art

As for this type of battery pack, there is known a battery pack that includes a pack case that has a substantially rectangular shape and that is installed in a vehicle, oriented with the long sides of the rectangular shape along a front-rear direction of the vehicle, a plurality of stacks including a plurality of battery modules each having a flat box-like form and stacked flat within the pack case in an up-down direction, and a cooling unit disposed at one end portion of the pack case in a longitudinal direction thereof (e.g., see Japanese Unexamined Patent Application Publication No. 2016-219260 (JP 2016-219260 A)). The cooling unit of this battery pack includes a sirocco fan that rotationally drives a multi-blade fan by an electric motor to blow air, an intake port that extends in a slender shape along the front-rear direction of the vehicle and opens toward one direction in a vehicle width direction of the vehicle, an evaporator that cools the air taken in through the intake port, and a discharge portion that is connected to a blower duct having a plurality of vent ports. The blower duct extends along one long side of the pack case in the front-rear direction, with each vent port opening toward a side face of a corresponding stack. Thus, air cooled by the evaporator is supplied from the discharge portion to each vent port of the blower duct along the perimeter of the pack case, and is discharged from each vent port toward a corresponding stack.

SUMMARY OF THE INVENTION The invention is defined by claim 1.

However, in the above battery pack, a cross-sectional area of a passage suddenly changes (rapidly increases) at a connecting portion between the discharge portion of the cooling unit and the blower duct, and between adjacent vent ports, and regions are formed in which air does not readily flow to each vent port. Accordingly, the temperature is not uniform throughout the stack as a whole, and moreover, the temperature varies among the stacks. Also, in the above battery pack, when the blower duct is extended to gradually change (gradually increase) the passage cross-sectional area in the cooling unit, the size of the build of the battery pack increases.

Accordingly, the present disclosure provides a battery pack that can uniformly cool battery stacks including a plurality of battery modules stacked in one direction, while suppressing increase in the size of the build of the battery pack.

A battery pack according to a first aspect of the present disclosure is configured to be installed in a vehicle, and includes a battery stack including a plurality of battery modules stacked in a first direction, an air supply member of which a position with respect to the battery stack is fixed, and that defines an internal space extending in a second direction orthogonal to the first direction along a first side face of the battery stack, and a partition member that divides the internal space of the air supply member in the first direction into a plurality of air supply passages configured to each extend in the second direction and be connected to a blower device.

In the battery pack according to the first aspect of the present disclosure, the position of the air supply member is fixed with respect to the battery stack that includes the battery modules stacked in the first direction. The air supply member defines the internal space extending along the first side face of the battery stack in the second direction, orthogonal to the first direction, i.e., the stacking direction of the battery modules. Also, the internal space of the air supply member is divided into multiple air supply passages in the first direction. The air supply passages each extend in the second direction and are connected to blowers. This enables a cross-sectional area of the air supply passages to be made to be closer to an opening area of the discharge ports of the blowers, so that when air is supplied from the blowers into the respective air supply passages, formation of regions where air does not readily flow can be satisfactorily suppressed. Accordingly, air can be evenly delivered from each of the air supply passages to the battery stack, to cool the battery stack so that the overall temperature thereof becomes uniform. Further, there is no need to extend (enlarge) the air supply member in order to suppress sudden change in the cross-sectional area of the passage, and accordingly increase in the size of the build of the battery pack can be satisfactorily suppressed. As a result, the battery pack according to the present disclosure can uniformly cool the battery stack including the battery modules stacked in the first direction, while suppressing increase in the size of the build.

Also, the first direction may be an up-down direction of the vehicle, and the battery pack may be installed in the vehicle such that the second direction is parallel to a vehicle width direction of the vehicle. This enables improving space efficiency of the vehicle in which the battery pack including the battery modules (battery stack) stacked (stacked flat) in the up-down direction is installed.

The air supply passages may include a first air supply passage on a first side and a second air supply passage on a second side in the first direction, the blower device may include a first blower and a second blower, and the air supply member may include a first air supply port configured to communicate with the first air supply passage on a first side in the second direction and be connected to a first discharge port of the first blower, and a second air supply port configured to communicate with the second air supply passage on a second side in the second direction and be connected to a second discharge port of the second blower.

An area of the first discharge port may be the same area as a cross-sectional area of the first air supply passage, and an area of the second discharge port may be the same area as a cross-sectional area of the second air supply passage.

Also, the battery stack may include a plurality of air passages provided between battery modules that are adjacent to each other, the air passages including openings at the first side face and openings at a second side face on an opposite side from the first side face, the internal space of the air supply member may communicate with the openings at the first side face included in the air passages, and a position of an exhaust member defining an exhaust portion configured to allow air flowing out from the openings at the second side face included in the air passages to flow to an outside may be fixed with respect to the battery stack. Accordingly, the entire battery stack can be efficiently and evenly cooled.

The partition member supports a wire harness connected to a component member of the battery stack. This enables the cooling efficiency of the battery stack to be improved by making the air flow uniform in each air supply passage without disturbing the air flow. In addition, there is no need to separately prepare a routing space for the wire harness or parts for routing, and accordingly increase in the size of the build of the battery pack, increase in the number of parts, increase in costs, and so forth, can be satisfactorily suppressed.

Also, the partition member may include an accommodation space through which the wire harness is inserted. This enables suppressing the turbulence of the air flow in each air supply passage extremely satisfactorily.

The partition member may include a first member of which a position is fixed with respect to the battery stack and that extends in the second direction, a second member that is fit with the first member and defines the accommodation space together with the first member, and that extends in the second direction and protrudes toward an inner face of the air supply member, and an elastic member that is fixed to a tip portion of the second member and abuts the inner face of the air supply member. This enables ease of assembling the partition member and ease of routing the wire harness to be further improved.

The tip portion of the second member may be a tip portion on an opposite side from a portion at which the second member is fit with the first member.

The battery pack according to the first aspect of the present disclosure may further include a pack case that accommodates the battery stack, and the air supply member may be fixed to the pack case.

The battery pack according to the first aspect of the present disclosure may further include a pack case that accommodates the battery stack, and the exhaust member may be fixed to the pack case, and the exhaust portion may be a gap between the exhaust member and the pack case.

The battery pack according to the first aspect of the present disclosure may further include a pack case that accommodates the battery stack, and the first member may be fixed to the pack case.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic configuration diagram illustrating a vehicle in which a battery pack according to the present disclosure is installed;
FIG. 2 is a perspective view illustrating the battery pack according to the present disclosure;
FIG. 3 is a cross-sectional view taken along line III-III in FIG. 2; and
FIG. 4 is a sectional view taken along line IV-IV in FIG. 2.

### DETAILED DESCRIPTION OF EMBODIMENTS

An embodiment for carrying out the invention of the present disclosure will be described with reference to the drawings.

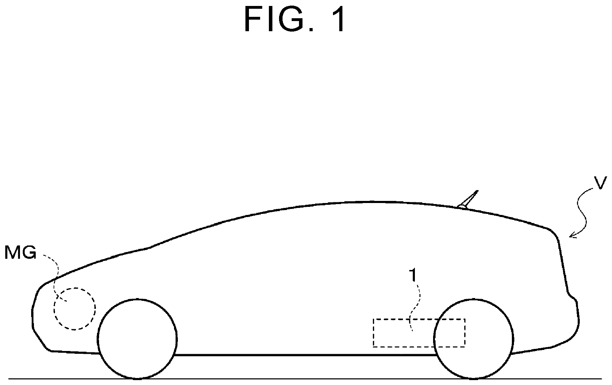

FIG. 1 is a schematic configuration diagram illustrating a vehicle V in which a battery pack 1 according to the present disclosure is installed. The vehicle V illustrated in FIG. 1 is a battery electric vehicle (BEV) or a hybrid electric vehicle (hybrid electric vehicle (BEV) or plug-in hybrid electric vehicle (PHEV)) including, in addition to the battery pack 1, a motor generator (three-phase alternating current (AC) electric motor) MG that is connected to the battery pack 1 via electric power control devices including an inverter and so forth, and a system main relay (all omitted from illustration), and that is capable of exchanging electric power with the battery pack 1 to output drive power for traveling and regenerative braking force. In the present embodiment, the battery pack 1 is fixed to a vehicle body of the vehicle V so as to be located below rear seats (second row seats).

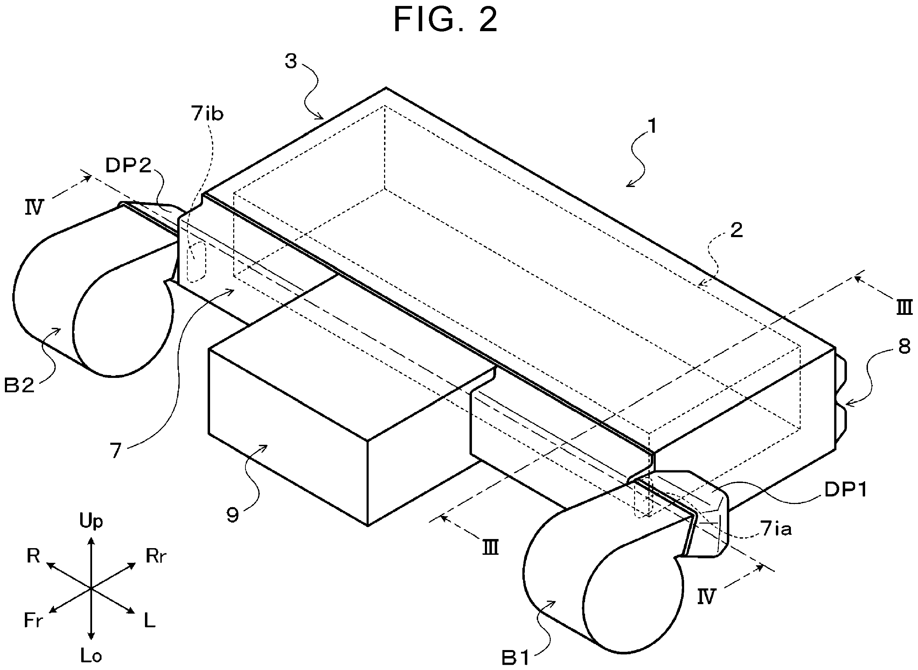

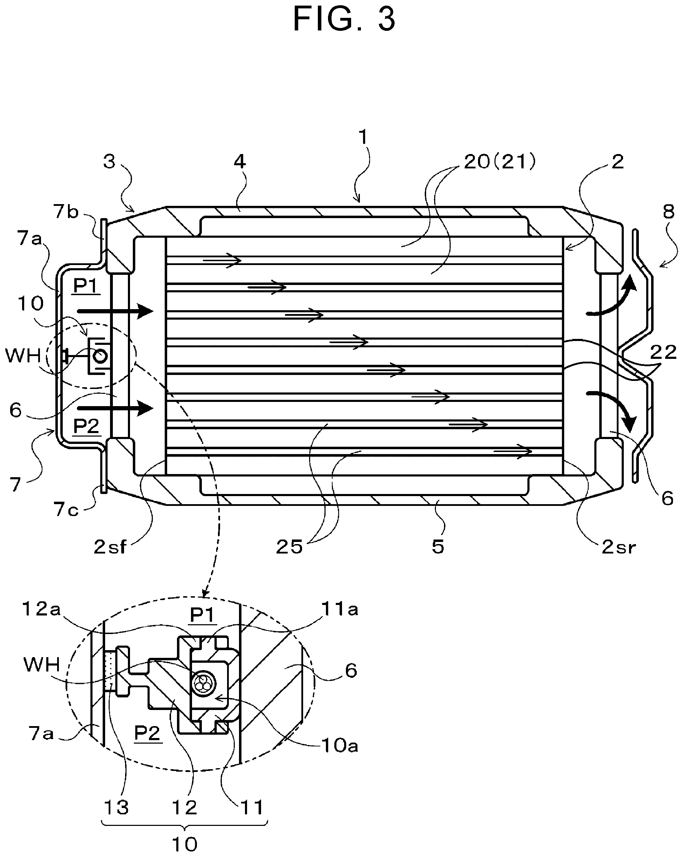

As illustrated in FIGS. 2 and 3, the battery pack 1 includes, for example, a single battery stack 2 including a plurality of battery modules 20 connected in series, and a pack case 3 in which the battery stack 2 is accommodated. Each battery module 20 of the battery stack 2 includes a module case 21 that is flat and relatively elongated substantially cuboid in shape, a plurality of battery cells (omitted from illustration) accommodated in the module case 21, positive and negative terminals (omitted from illustration) protruding from a side face on a short side of the module case 21, and so forth. The battery cells making up each battery module 20 are nickel-metal hydride secondary batteries, lithium-ion secondary batteries, or the like, provided as so-called laminate cells, including an outer member formed of a laminate film that is flexible, and sheets of positive electrodes, negative electrodes, and separators that are stacked and accommodated along with an electrolytic solution inside the outer member (electrode laminate). The battery cells are connected in series, for example, and are accommodated inside the module case 21 in a state of being stacked in a thickness direction (an up-down direction).

As illustrated in FIG. 3, the battery modules 20 are integrated by being stacked (stacked flat) in the thickness direction (up-down direction), with spacers 22 that each have a substantially rectangular planar shape and insulating sheets (omitted from illustration) interposed therebetween. Each spacer 22 extends parallel to the side face on the short side and has a plurality of recesses arrayed along a side face on a long side, and is interposed between two battery modules 20 adjacent to each other in the thickness direction (up-down direction). Accordingly, the battery stack 2 is provided with a plurality of air passages 25 by the recesses of each spacer 22. That is to say, the air passages 25 extend along the side face on the short side of the battery stack 2, between the battery modules 20 adjacent to each other in the thickness direction (up-down direction), and as illustrated in FIG. 3, open to a first side face (one side face) 2sf on the long side of the battery stack 2 and to a second side face (other side face) 2sr on the opposite side from the first side face 2sf.

The pack case 3 has an upper-side case half portion 4 located on the upper side when the battery pack 1 is installed in the vehicle V, and a lower-side case half portion 5 located on the lower side when the battery pack 1 is installed in the vehicle V, a plurality of supporting posts 6, a first side cover 7 serving as an air supply member, a second side cover 8 serving as an exhaust member, and an extension case 9. The upper-side case half portion 4 is formed of metal or resin so as to cover an upper face and upper portions of both end faces of the battery stack 2, and has a substantially rectangular planar shape. The lower-side case half portion 5 is formed of metal or resin so as to cover a lower face and lower portions of both end faces of the battery stack 2, and has a substantially rectangular planar shape.

As illustrated in FIG. 3, the upper-side case half portion 4 and the lower-side case half portion 5 are integrated via the supporting posts 6, and the battery stack 2 is disposed between the upper-side case half portion 4 and the lower-side case half portion 5, and is fixed to both. The supporting posts 6 are provided between side end portions of the upper-side case half portion 4 on both sides (long sides), and side end portions of the lower-side case half portion 5 on both sides (long sides), with spaces therebetween in a longitudinal direction of the upper-side case half portion 4 and the lower-side case half portion 5. As a result, opening portions (omitted from illustration) are provided between the supporting posts 6 adj acent to each other, facing the first side face 2sf or the second side face 2sr of the battery stack 2 and permitting passage of air.

The first side cover 7 of the pack case 3 is formed by stamping a metal plate, for example, and has substantially the same longitudinal length as the upper-side case half portion 4 and the lower-side case half portion 5. As illustrated in FIG. 3, the first side cover 7 includes a duct portion 7a that has a substantially letter-C-shaped sectional shape, an upper-side fixing portion 7b extending upward in the drawing from an upper side edge portion of the duct portion 7a in FIG. 3, and a lower-side fixing portion 7c extending downward in the drawing from a lower side edge portion of the duct portion 7a in FIG. 3.

The upper-side fixing portion 7b of the first side cover 7 is fixed to one side face of the upper-side case half portion 4 (the left side in FIG. 3), and the lower-side fixing portion 7c is fixed to one side face of the lower-side case half portion 5 (the left side in FIG. 3). The fixing may be performed by welding or by fastening with screws, for example. The fixing may be performed by a technology other than welding, and the fixing may be performed by a member other than a screw. Thus, the opening portions provided between the supporting posts 6 that are adjacent to each other are covered by the first side cover 7, and an internal space defined by the duct portion 7a extends in a direction (second direction) along the above-described supporting posts 6 and the first side face 2sf of the battery stack 2. The second direction is orthogonal to both of the stacking direction of the battery modules 20, i.e., the up-down direction, (first direction), and the extending direction of the air passage 25. Further, the internal space of the duct portion 7a communicates with the openings of the air passages 25 provided in the battery stack 2, on the first side face 2sf side of the battery stack 2.

The second side cover 8 of the pack case 3 is formed by stamping a metal plate, for example, and has substantially the same longitudinal length as the upper-side case half portion 4 and the lower-side case half portion 5. As illustrated in FIG. 3, the second side cover 8 is fixed to the supporting posts 6 arrayed along the second side face 2sr of the battery stack 2, defining a space communicating with the openings of the air passages 25 provided in the battery stack 2 on the second side face 2sr side. The second side cover 8 may be fixed by welding, or by fastening with screws, for example. The fixing may be performed by a technology other than welding, and the fixing may be performed by a member other than a screw. Further, in the present embodiment, gaps are provided between an upper end portion in FIG. 3 of the second side cover 8 and the other side face (the right side in FIG. 3) of the upper-side case half portion 4, and between a lower end portion in FIG. 3 of the second side cover 8 and the other side face of the lower-side case half portion 5 (the right side in FIG. 3). These gaps can be regarded as being exhaust portions.

As illustrated in FIG. 2, the extension case 9 of the pack case 3 protrudes from the first side cover 7, toward the opposite side from the second side cover 8 side, in the vicinity of a middle portion in the longitudinal direction of the pack case 3, and is linked to the upper-side case half portion 4 and the lower-side case half portion 5. A junction box that is omitted from illustration, other electric equipment, and so forth, are accommodated inside the extension case 9.

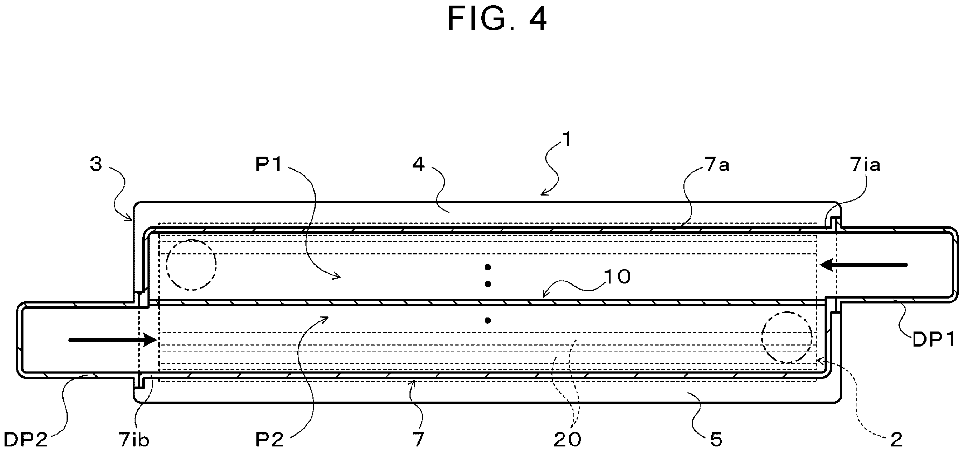

Further, a partition member (separator) 10 is disposed in the internal space of the duct portion 7a of the first side cover 7. As illustrated in FIG. 3, the partition member 10 is disposed in the vicinity of the middle of the internal space of the duct portion 7a in the up-down direction, thereby dividing (partitioning) the internal space into two in the stacking direction of the battery modules 20, i.e., in the up-down direction (first direction). Accordingly, in the internal space of the duct portion 7a, a first air supply passage P1 is provided on an upper side (one side) in the stacking direction of the battery modules 20, and a second air supply passage P2 is provided on a lower side (other side) thereof, as illustrated in FIGS. 3 and 4. The first and second air supply passages P1 and P2 have substantially the same passage cross-sectional area, and each extend in the orthogonal direction to both the stacking direction of the battery modules 20 and the extending direction of the air passages 25 (second direction). Further, the duct portion 7a of the first side cover 7 is provided with a first air supply port 7ia and a second air supply port 7ib. The first air supply port 7ia is provided at one end (one side in the second direction) of the duct portion 7a (end portion on the right side in FIG. 4) so as to communicate with the first air supply passage P1. The second air supply port 7ib is provided at the other end (other side in the second direction) of the duct portion 7a (end portion on the left side in FIG. 4) so as to communicate with the second air supply passage P2.

In the present embodiment, the partition member 10 includes a first member 11 and a second member 12, each having substantially the same longitudinal length as the duct portion 7a (internal space) of the first side cover 7. The first member 11 is made of resin and has a substantially letter-C-shaped cross-sectional shape, as illustrated in FIG. 3. That is to say, the first member 11 includes a back portion, and a recess that opens on the opposite side from the back portion. The back portion of the first member 11 is fixed to the supporting posts 6 of the pack case 3 arrayed along the first side face 2sf of the battery stack 2, such that the recess faces an inner face of the duct portion 7a of the first side cover 7. The first member 11 may be fixed by welding or by fastening with screws, or by an adhesive, for example. The fixing may be performed by a technology other than welding, the fixing may be performed by a substance other than adhesive, and the fixing may be performed by a member other than a screw. Thus, the first member 11 extends in a direction (second direction) orthogonal to both the stacking direction of the battery modules 20 and the extending direction of the air passages 25, along the supporting posts 6 and the first side face 2sf of and the battery stack 2.

The second member 12 is made of resin and has a plurality of engaging portions 12a that engage a corresponding plurality of protrusions 11a provided on the upper face and the lower face of the first member 11 in FIG. 3. The second member 12 and the first member 11 define an accommodation space 10a by being fit to each other via the protrusions 11a and the engaging portions 12a, and closing off the recess (opening) of the first member 11. Further, the second member 12 extends in a direction (second direction) orthogonal to both the stacking direction of the battery modules 20 along the first side face 2sf of the battery stack 2 and the extending direction of the air passage 25, and also protrudes toward the inner face of the duct portion 7a of the first side cover 7. Further, an elastic member 13, such as a resin sponge for example, is fixed to a tip portion of the second member 12, so as to abut the inner face of the duct portion 7a. The fixing may be performed by an adhesive, for example. The fixing may be performed by a substance other than an adhesive.

When disposing the partition member 10 in the internal space of the duct portion 7a, first, the back portion of the first member 11 is fixed to the supporting posts 6 (battery stack 2). Next, a wire harness WH that is connected to component members of the battery stack 2, i.e., various types of sensors provided in the battery stack 2, is disposed in the recess of the first member 11. Further, the first member 11 and the second member 12 are fit to each other so as to support (hold) the wire harness WH, and the first side cover 7 is fixed to the upper-side case half portion 4 and the lower-side case half portion 5 such that the inner face of the duct portion 7a abuts the elastic member 13. Accordingly, as illustrated in FIG. 3, the wire harness WH is inserted into the accommodation space 10a defined by the first member 11 and the second member 12, and is supported (held) by the partition member 10 in the internal space of the duct portion 7a, and the inside of the duct portion 7a is divided into a plurality of spaces by the partition member 10.

The battery pack 1 configured as described above is disposed and fixed below the rear seats (second row seats) such that the first side cover 7 and the extension case 9 are located on the front side of the battery pack 1 in a front-rear direction of the vehicle V, and the longitudinal direction of the pack case 3 is parallel to a vehicle width direction of the vehicle V, as illustrated in FIG. 2. The fixing may be performed by a bracket, for example. The fixing member is not limited to a bracket. That is to say, the first side cover 7, the partition member 10, the first side face 2sf of the battery stack 2, and so forth, of the battery pack 1 extend in the width direction of the vehicle further in the front in the front-rear direction of the vehicle as compared to the second side cover 8 and the second side face 2sr of the battery stack 2, and so forth. This enables improving space efficiency of the vehicle V in which the battery pack 1, including the battery modules 20 (battery stack 2) stacked (stacked flat) in the up-down direction, is installed.

Further, as illustrated in FIG. 2, a discharge port DP1 of a first blower B 1 is connected to the first air supply port 7ia of the first side cover 7 (duct portion 7a), disposed on the front side of the pack case 3 and on the left side thereof in the vehicle width direction, and a discharge port DP2 of a second blower B2 is connected to the second air supply port 7ib of the first side cover 7 (duct portion 7a), disposed on the front side of the pack case 3 and on the right side thereof in the vehicle width direction. The first and second blowers B 1 and B2 are electric blowers having the same specifications and are controlled by a control device that is omitted from illustration. By disposing the first and second blowers B 1 and B2 in the vehicle body with a spacing therebetween in the vehicle width direction, the space efficiency of the vehicle V can be further improved. In the present embodiment, a cooler (heat exchanger), omitted from illustration, which shares refrigerant with an air conditioner that performs air conditioning within a vehicle cabin of the vehicle V, for example, is disposed in the discharge ports DP 1 and DP2 of the first and second blowers B 1 and B2, and cools air delivered from the first and second blowers B 1 and B2. The supply of the refrigerant to each cooler is controlled by the control device, in accordance with the temperature of the battery stack 2 (each battery module 20) and so forth. However, the cooler may be omitted from the discharge ports DP1 and DP2 of the first and second blowers B1 and B2, and the air delivered from the first and second blowers B1 and B2 may be cooled by using the air in the vehicle cabin (cooled air from the air conditioner during the summer months).

When the first and second blowers B1 and B2 are operated while the vehicle V is traveling, air is supplied from the discharge port DP1 of the first blower B1 to the first air supply passage P1 provided to the duct portion 7a of the first side cover 7, via the first air supply port 7ia. Further, air is supplied from the discharge port DP2 of the second blower B2 to the second air supply passage P2 provided to the duct portion 7a of the first side cover 7 via the second air supply port 7ib. As can be seen from FIG. 3, the air supplied to the first air supply passage P1 flows into the air passages 25 arrayed in an upper half side region of the battery stack 2, via the opening portions between the adjacent supporting posts 6. The air flowing into the air passages 25 draws away heat from the upper half side region of the battery stack 2, passes through a space defined by the second side cover 8, and flows outside from the pack case 3 through gaps between the side face of the upper-side case half portion 4 and the upper end portion of the second side cover 8. Also, as can be seen from FIG. 3, the air supplied to the second air supply passage P2 flows into the air passages 25 arrayed in a lower half side region of the battery stack 2, via the opening portions between the adjacent supporting posts 6. The air flowing into the air passages 25 draws away heat from the lower half side region of the battery stack 2, passes through the space defined by the second side cover 8, and flows outside from the pack case 3 through gaps between the side face of the lower-side case half portion 5 and the lower end portion of the second side cover 8.

Now, in the battery pack 1, the upper side first air supply passage P1 and the lower side second air supply passage P2 are provided by dividing the internal space of the first side cover 7 (duct portion 7a) in the stacking direction of the battery modules 20, by the partition member 10. Thus, as illustrated in FIG. 4, cross-sectional areas of the first and second air supply passages P1 and P2 can be made to be close to (generally the same as) the opening areas of the discharge ports DP1 and DP2 of the first and second blowers B1 and B2, and accordingly when air is supplied from the first blower B1 or the second blower B2 in the first and second air supply passages P1 and P2, formation of a region at which air does not readily flow can be satisfactorily suppressed. Accordingly, air can be evenly delivered from each of the first and second air supply passages P1 and P2 to the battery stack 2, to cool the battery stack 2 so that the overall temperature thereof becomes uniform.

Further, when the partition member 10 is not provided in the battery pack 1, the cross-sectional area of the internal space of the duct portion 7a rapidly increases with respect to the passage cross-sectional areas of the discharge ports DP1 and DP2, which leads to formation of regions (see the long dashed double-short dashed lines in FIG. 4) in which the air traveling straight from the discharge ports DP1 and DP2 of the first and second blowers B1 and B2 does not smoothly flow in. In order to avoid such a situation, extending (enlarging) the first side cover 7 to both sides (second direction) in FIG. 4 becomes necessary, so that this region does not face the first side face 2sf of the battery stack 2. Conversely, by dividing the internal space of the duct portion 7a by the partition member 10 to provide the first and second air supply passages P1 and P2, sudden change (rapid increase) in the cross-sectional area of the passages can be suppressed, and accordingly, there is no need to extend the first side cover 7, and increase in the size of the build of the battery pack 1 (pack case 3) can be satisfactorily suppressed. As a result, the battery pack 1 can uniformly cool the battery stack 2 including the battery modules 20 stacked in the up-down direction (stacked flat), while suppressing increase in the size of the build.

Further, the battery stack 2 has openings in the first side face 2sf and in the second side face 2sr on the opposite side from the first side face 2sf, and includes the air passages 25 provided between battery modules 20 that are adjacent to each other. Accordingly, air is fed in from each of the first and second air supply passages P1 and P2 to each of the air passages 25, and air flowing out from the air passages 25 externally flows out through the exhaust portion (the gaps between the second side cover 8 and the pack case 3) defined by the second side cover 8 serving as an exhaust member, whereby the entire battery stack 2 can be efficiently and evenly cooled. It should be noted, however, that the air passages 25 do not necessarily have to be disposed in the battery stack 2 as described above, and may pass through the module case 21 of each battery module 20, for example.

Also, in the above embodiment, the partition member 10 has the accommodation space 10a through which the wire harness WH connected to various types of sensors and so forth, provided in the battery stack 2, is inserted, and the wire harness WH is supported (held) in the internal space of the first side cover 7 (duct portion 7a). This enables turbulence of the air flow in the first and second air supply passages P1 and P2 to be suppressed extremely satisfactorily, and the cooling efficiency of the battery stack 2 to be improved. In addition, since there is no need to separately prepare a routing space for the wire harness WH or parts for routing, increase in the size of the build of the battery pack 1, increase in the number of parts, increase in costs, and so forth can be satisfactorily suppressed. It should be noted, however, that the accommodation space 10a through which the wire harness WH is inserted does not necessarily have to be provided, as long as the partition member 10 supports the wire harness WH so as to make the air flow uniform without disturbing the air flow.

Further, in the above embodiment, the partition member 10 includes the first member 11 of which the position is fixed with respect to the battery stack 2, and which extends in the direction (second direction) orthogonal to the stacking direction of the battery modules 20, the second member 12 that defines the accommodation space 10a together with the first member 11 by being fit to each other, and extends in the direction (second direction) orthogonal to the stacking direction, as well as protruding toward the inner face of the first side cover 7 (duct portion 7a), and the elastic member 13 that is fixed to the tip end portion of the second member 12 and abuts the inner face of the first side cover 7. Thus, by assembling the first member 11, the second member 12, and the first side cover 7, to the upper-side case half portion 4 and the lower-side case half portion 5 (battery stack 2) in this order, the internal space of the duct portion 7a can be divided into multiple spaces by the partition member 10, and the wire harness WH can be routed through this internal space. As a result, in the battery pack 1, the ease of assembling the partition member 10 and the ease of routing the wire harness WH can be further improved.

In the battery pack 1, a plurality of partition members that each divide the internal space of the duct portion 7a in the stacking direction of the battery module 20 may be provided with respect to the first side cover 7, and three or more air supply passages may be provided in the internal space of the duct portion 7a. Further, the battery pack 1 may include a plurality of battery stacks including the battery modules 20 stacked in the up-down direction, and the battery stacks may be disposed side by side in the longitudinal direction in the pack case 3.

The invention according to the present disclosure is applicable in the battery pack manufacturing industry.

## Claims

1. A battery pack (1) configured to be installed in a vehicle (V), the battery pack (1) comprising:
a battery stack (2) including a plurality of battery modules (20) stacked in a first direction;
an air supply member (7) of which a position with respect to the battery stack (2) is fixed, and that defines an internal space extending in a second direction orthogonal to the first direction along a first side face (2sf) of the battery stack (2); and
a partition member (10) that divides the internal space of the air supply member (7) in the first direction into a plurality of air supply passages (P1, P2) configured to each extend in the second direction and be connected to a blower device (B1, B2), wherein the partition member (10) supports a wire harness (WH) connected to a component member of the battery stack (2).

2. The battery pack (1) according to claim 1, wherein
the first direction is an up-down direction of the vehicle (V), and
the battery pack (1) is installed in the vehicle (V) such that the second direction is parallel to a vehicle width direction of the vehicle (V).

3. The battery pack (1) according to claim 1 or 2, wherein
the air supply passages (P1, P2) include a first air supply passage (P1) on a first side and a second air supply passage (P2) on a second side in the first direction,
the blower device (B1, B2) includes a first blower (B1) and a second blower (B2), and
the air supply member (7) includes a first air supply port (7ia) configured to communicate with the first air supply passage (P1) on a first side in the second direction and be connected to a first discharge port (DP1) of the first blower (B1), and a second air supply port (7ib) configured to communicate with the second air supply passage (P2) on a second side in the second direction and be connected to a second discharge port (DP2) of the second blower (B2).

4. The battery pack (1) according to claim 3, wherein
an area of the first discharge port (DP1) is the same area as a cross-sectional area of the first air supply passage (P1), and
an area of the second discharge port (DP2) is the same area as a cross-sectional area of the second air supply passage (P2).

5. The battery pack (1) according to any one of claims 1 to 4, wherein
the battery stack (2) includes a plurality of air passages (25) provided between battery modules (20) that are adjacent to each other, the air passages (25) including openings at the first side face (2sf) and openings at a second side face (2sr) on an opposite side from the first side face (2sf),
the internal space of the air supply member (7) communicates with the openings at the first side face (2sf) included in the air passages (25), and
a position of an exhaust member (8) defining an exhaust portion configured to allow air flowing out from the openings at the second side face (2sr) included in the air passages (25) to flow to an outside is fixed with respect to the battery stack (2).

6. The battery pack (1) according to any one of claims 1-5, wherein the partition member (10) includes an accommodation space through which the wire harness (WH) is inserted.

7. The battery pack (1) according to claim 6, wherein the partition member (10) includes
a first member (11) of which a position is fixed with respect to the battery stack (2) and that extends in the second direction,
a second member (12) that is fit with the first member (11) and defines the accommodation space together with the first member (11), and that extends in the second direction and protrudes toward an inner face of the air supply member (7), and
an elastic member (13) that is fixed to a tip portion of the second member (12) and abuts the inner face of the air supply member (7).

8. The battery pack (1) according to claim 7, wherein the tip portion of the second member (12) is a tip portion on an opposite side from a portion at which the second member (12) is fit with the first member (11).

9. The battery pack (1) according to any one of claims 1 to 8, further comprising a pack case (3) that accommodates the battery stack (2), wherein the air supply member (7) is fixed to the pack case (3).

10. The battery pack (1) according to claim 5, further comprising a pack case (3) that accommodates the battery stack (2), wherein
the exhaust member (8) is fixed to the pack case (3), and
the exhaust portion is a gap between the exhaust member (8) and the pack case (3).

11. The battery pack (1) according to claim 7, further comprising a pack case (3) that accommodates the battery stack (2), wherein the first member (11) is fixed to the pack case (3).

## Patentansprüche

1. Batteriepack (1), das dazu ausgelegt ist, in ein Fahrzeug (V) eingebaut zu werden, wobei das Batteriepack (1) umfasst:
einen Batteriestapel (2) mit einer Vielzahl von Batteriemodulen (20), die in einer ersten Richtung gestapelt sind;
ein Luftzufuhrelement (7), dessen Position in Bezug auf den Batteriestapel (2) festgelegt ist und das einen Innenraum definiert, der sich in einer zweiten Richtung orthogonal zur ersten Richtung entlang einer ersten Seitenfläche (2sf) des Batteriestapels (2) erstreckt; und ein Trennelement (10), das den Innenraum des Luftzufuhrelements (7) in der ersten Richtung in eine Vielzahl von Luftzufuhrkanälen (P1, P2) unterteilt, die dazu ausgelegt sind, sich jeweils in der zweiten Richtung zu erstrecken und mit einer Gebläsevorrichtung (B1, B2) verbunden zu werden, wobei das Trennungselement (10) einen Kabelbaum (WH) trägt, der mit einem Komponentenelement des Batteriestapels (2) verbunden ist.

2. Batteriepack (1) nach Anspruch 1, wobei
die erste Richtung eine Aufwärts-Abwärts-Richtung des Fahrzeugs (V) ist, und
das Batteriepack (1) so in das Fahrzeug (V) eingebaut ist, dass die zweite Richtung parallel zu einer Fahrzeugbreitenrichtung des Fahrzeugs (V) verläuft.

3. Batteriepack (1) nach Anspruch 1 oder 2, wobei
die Luftzufuhrkanäle (P1, P2) einen ersten Luftzufuhrkanal (P1) auf einer ersten Seite und einen zweiten Luftzufuhrkanal (P2) auf einer zweiten Seite in der ersten Richtung beinhalten,
die Gebläsevorrichtung (B1, B2) ein erstes Gebläse (B1) und ein zweites Gebläse (B2) beinhaltet, und
das Luftzufuhrelement (7) eine erste Luftzufuhröffnung (7ia), die dazu ausgelegt ist, mit dem ersten Luftzufuhrkanal (P1) auf einer ersten Seite in der zweiten Richtung in Verbindung zu stehen und mit einer ersten Auslassöffnung (DPI) des ersten Gebläses (B1) verbunden zu sein, und eine zweite Luftzufuhröffnung (7ib) enthält, die dazu ausgelegt ist, mit dem zweiten Luftzufuhrkanal (P2) auf einer zweiten Seite in der zweiten Richtung in Verbindung zu stehen und mit einer zweiten Auslassöffnung (DP2) des zweiten Gebläses (B2) verbunden zu sein.

4. Batteriepack (1) nach Anspruch 3, wobei
eine Fläche der ersten Auslassöffnung (DP1) die gleiche Fläche wie eine Querschnittsfläche des ersten Luftzufuhrkanals (P1) ist, und
eine Fläche der zweiten Auslassöffnung (DP2) die gleiche Fläche wie eine Querschnittsfläche des zweiten Luftzufuhrkanals (P2) ist.

5. Batteriepack (1) nach einem der Ansprüche 1 bis 4, wobei
der Batteriestapel (2) eine Vielzahl von Luftkanälen (25) enthält, die zwischen einander benachbarten Batteriemodulen (20) vorgesehen sind, wobei die Luftkanäle (25) Öffnungen an der ersten Seitenfläche (2sf) und Öffnungen an einer zweiten Seitenfläche (2sr) auf einer der ersten Seitenfläche (2sf) gegenüberliegenden Seite enthalten,
der Innenraum des Luftzufuhrelements (7) mit den in den Luftkanälen (25) enthaltenen Öffnungen an der ersten Seitenfläche (2sf) in Verbindung steht, und
eine Position eines Abluftelements (8), das einen Abluftbereich definiert, der so ausgebildet ist, dass die aus den Öffnungen an der zweiten Seitenfläche (2sr) der Luftkanäle (25) ausströmende Luft nach außen strömen kann, in Bezug auf den Batteriestapel (2) festgelegt ist.

6. Batteriepack (1) nach einem der Ansprüche 1-5, wobei das Trennelement (10) einen Aufnahmeraum enthält, durch den der Kabelbaum (WH) eingeführt ist.

7. Batteriepack (1) nach Anspruch 6, wobei das Trennelement (10) enthält:
ein erstes Element (11), dessen Position in Bezug auf den Batteriestapel (2) festgelegt ist und das sich in der zweiten Richtung erstreckt,
ein zweites Element (12), das in das erste Element (11) eingepasst ist und zusammen mit dem ersten Element (11) den Aufnahmeraum definiert, und das sich in der zweiten Richtung erstreckt und zu einer Innenfläche des Luftzufuhrelements (7) hin vorsteht, und
ein elastisches Element (13), das an einem Spitzenabschnitt des zweiten Elements (12) befestigt ist und an der Innenfläche des Luftzufuhrelements (7) anliegt.

8. Batteriepack (1) nach Anspruch 7, wobei der Spitzenabschnitt des zweiten Elements (12) ein Spitzenabschnitt auf einer Seite ist, die einem Abschnitt gegenüberliegt, an dem das zweite Element (12) mit dem ersten Element (11) zusammengefügt ist.

9. Batteriepack (1) nach einem der Ansprüche 1 bis 8, ferner umfassend ein Packgehäuse (3), das den Batteriestapel (2) aufnimmt, wobei das Luftzufuhrelement (7) an dem Packgehäuse (3) befestigt ist.

10. Batteriepack (1) nach Anspruch 5, ferner umfassend ein Packgehäuse (3), das den Batteriestapel (2) aufnimmt, wobei
das Abluftelement (8) an dem Packgehäuse (3) befestigt ist, und
der Abluftbereich ein Spalt zwischen dem Abluftelement (8) und dem Packgehäuse (3) ist.

11. Batteriepack (1) nach Anspruch 7, ferner umfassend ein Packgehäuse (3), das den Batteriestapel (2) aufnimmt, wobei das erste Element (11) an dem Packgehäuse (3) befestigt ist.

## Revendications

1. Bloc-batterie (1) configuré pour être installé dans un véhicule (V), le bloc-batterie (1) comprenant :
un empilement de batteries (2) comprenant une pluralité de modules de batteries (20) empilés dans une première direction ;
un élément d'alimentation en air (7) dont la position par rapport à l'empilement de batteries (2) est fixe et qui définit un espace interne s'étendant dans une deuxième direction orthogonale à la première direction le long d'une première face latérale (2sf) de l'empilement de batteries (2) ; et
un élément de séparation (10) qui divise l'espace interne de l'élément d'alimentation en air (7) dans la première direction en une pluralité de passages d'alimentation en air (P1, P2) configurés pour s'étendre chacun dans la deuxième direction et être connectés à un dispositif de soufflerie (B1, B2), dans lequel l'élément de séparation (10) supporte un faisceau de câbles (WH) connecté à un élément composant de l'empilement de batteries (2).

2. Bloc-batterie (1) selon la revendication 1, dans lequel :
la première direction est une direction haut-bas du véhicule (V), et
le bloc-batterie (1) est installé dans le véhicule (V) de telle sorte que la deuxième direction est parallèle à la direction de la largeur du véhicule (V).

3. Bloc-batterie (1) selon la revendication 1 ou la revendication 2, dans lequel :
les passages d'alimentation en air (P1, P2) comprennent un premier passage d'alimentation en air (P1) sur un premier côté et un deuxième passage d'alimentation en air (P2) sur un deuxième côté dans la première direction,
le dispositif de soufflage (B1, B2) comprend un premier souffleur (B1) et un deuxième souffleur (B2), et
l'élément d'alimentation en air (7) comprend un premier orifice d'alimentation en air (7ia) configuré pour communiquer avec le premier passage d'alimentation en air (P1) sur un premier côté dans la deuxième direction et être connecté à un premier orifice de décharge (DPI) du premier souffleur (B1), et un deuxième orifice d'alimentation en air (7ib) configuré pour communiquer avec le deuxième passage d'alimentation en air (P2) sur un deuxième côté dans la deuxième direction et être connecté à un deuxième orifice de décharge (DP2) du deuxième souffleur (B2).

4. Bloc-batterie (1) selon la revendication 3, dans lequel :
la surface du premier orifice de décharge (DP1) est la même que la surface de la section transversale du premier passage d'alimentation en air (P1), et
la surface du deuxième orifice de décharge (DP2) est la même que la surface de la section transversale du deuxième passage d'alimentation en air (P2).

5. Bloc-batterie (1) selon l'une quelconque des revendications 1 à 4, dans lequel :
l'empilement de batteries (2) comprend une pluralité de passages d'air (25) pratiqués entre les modules de batterie (20) qui sont adjacents les uns aux autres, les passages d'air (25) comprenant des ouvertures sur la première face latérale (2sf) et des ouvertures sur une deuxième face latérale (2sr) sur un côté opposé à la première face latérale (2sf),
l'espace interne de l'élément d'alimentation en air (7) communique avec les ouvertures de la première face latérale (2sf) incluses dans les passages d'air (25), et une position d'un élément d'échappement (8) définissant une partie d'échappement configurée pour permettre à l'air s'écoulant des ouvertures de la deuxième face latérale (2sr) incluses dans les passages d'air (25) de s'écouler vers l'extérieur est fixée par rapport à l'empilement de batteries (2).

6. Bloc-batterie (1) selon l'une quelconque des revendications 1 à 5, dans lequel l'élément de séparation (10) comprend un espace de logement à travers lequel le faisceau de câbles (WH) est inséré.

7. Bloc-batterie (1) selon la revendication 6, dans lequel l'élément de séparation (10) comprend :
un premier élément (11) dont la position est fixe par rapport à l'empilement de batteries (2) et qui s'étend dans la deuxième direction,
un deuxième élément (12) qui est ajusté au premier élément (11) et définit l'espace de logement avec le premier élément (11), et qui s'étend dans la deuxième direction et fait saillie vers une face intérieure de l'élément d'alimentation en air (7), et
un élément élastique (13) qui est fixé à une partie d'extrémité du deuxième élément (12) et qui s'appuie sur la face intérieure de l'élément d'alimentation en air (7) .

8. Bloc-batterie (1) selon la revendication 7, dans lequel la partie d'extrémité du deuxième élément (12) est une partie d'extrémité sur un côté opposé à une partie au niveau de laquelle le deuxième élément (12) est ajusté avec le premier élément (11).

9. Bloc-batterie (1) selon l'une quelconque des revendications 1 à 8, comprenant en outre un boîtier de bloc (3) qui accueille l'empilement de batteries (2), l'élément d'alimentation en air (7) étant fixé au boîtier de bloc (3).

10. Bloc-batterie (1) selon la revendication 5, comprenant en outre un boîtier de bloc (3) qui accueille l'empilement de batteries (2), dans lequel :
l'élément d'échappement (8) est fixé au boîtier de bloc (3), et
la partie d'échappement est un espace entre l'élément d'échappement (8) et le boîtier de bloc (3).

11. Bloc-batterie (1) selon la revendication 7, comprenant en outre un boîtier de bloc (3) qui accueille l'empilement de batteries (2), le premier élément (11) étant fixé au boîtier de bloc (3).
